# EUROPEAN PATENT APPLICATION

(11) **EP 4 001 541 A1**
(43) Date of publication of application: **25.05.2022**
(21) Application number: 20207236.9
(22) Date of filing: 12.11.2020
(51) Int. Cl.: E04C 3/00, F16C 11/06

(54) **CONNECTION DEVICE WITH TWO BALL JOINTS AND A POLE**

(71) Applicant: Zambelli, Sergio, 24050 Zanica (Bergamo) (IT)
(72) Inventor: Zambelli, Sergio, 24050 Zanica (Bergamo) (IT)
(74) Representative: Modiano, Micaela Nadia

(57) **Abstract**

A connection device (1a; 1b), particularly of the strut-tie type, the particularity of which resides in the fact that it comprises two spherical joints (2, 3) which can be associated with the mutually facing surfaces (4, 5) of two components (6, 7) to be connected and a maneuvering pole (8) which can be associated, at its ends (9, 10), with the two spherical joints (2, 3). At least one of the spherical joints (2, 3) is associated with the maneuvering pole (8) by means of a threaded maneuvering coupling so as to compensate for any incidences of the surfaces (4, 5) of the two components and so as to be able to adapt the longitudinal length and the traction of the connection device (1a, 1b) as a function of the distance of said two surfaces (4, 5) by rotating the maneuvering pole (8) about its own longitudinal axis (11).

## Description

The present invention relates to a connection device, particularly of the strut-tie type.

In the field of civil construction, there are cases in which linear connecting elements, i.e., rods constituted by tubular elements, bars, poles or various types of profiles, are used which perform the role of strut-tie by mutually spacing two components and controlling the forces exchanged in the connection.

These rods have, at their ends, connection and linking elements in order to allow dry assembly obtained by doweling of flanges.

In other words, the connection of the rod is provided by using traditional flat hinges, which have flanges, larger than the rods, which are shaped like a fork, inside which the plate-like terminal with an eyelet, within which a dowel is inserted which joins the entire assembly, engages.

Statically, this type of connection is used in rods which perform the task of withstanding traction and compression stresses, i.e., in a connection device of the strut-tie type.

Typically, the aesthetics of these connections is dictated by their functional aspects, with the result of exhibiting an image of ostentation of mechanical technology, which does not comply with the architectural requirements that seek to express a softer, more elegant and more composed image.

In greater detail, the image offered is of the technical type, with the hinge flanges in view and much wider and bulkier than the rods themselves with threaded bars or bolts in view for the adjustment of the device.

In order to solve these and other problems, solutions are known which use hinges that remain within the space occupation of the rod itself, i.e., without protruding from it, and then conceal within the rods themselves the threaded pin for the adjustment of the extension of the rod in order to modify the distance between the components.

An emblematic example in this regard is constituted by a solution in which the rods are rectangular poles, the hinges are provided by means of a fork/base coupling, and the adjustment is concealed inside the rectangular poles with the technical role of these connections, which is to perform the static task of strut-tie between two horizontal sunbreaker components and with the aesthetic role of creating an architectural face image with greater elegance and beauty of the exposed metallic parts, especially of the hinges.

This solution can be used for example in faces of buildings provided with sunbreaker elements which shield the glazing of the rooms, which therefore require a number of connecting elements such as to space the sunbreaker elements that is proportional to the number of said sunbreaker elements.

As a consequence, as the number of sunbreaker elements increases, the view from the inside of the room toward the outside visually encounters the countless terminals of the rods.

It is obvious, therefore, that during design the choice of the type of connection device is directed at the type of connection that aesthetically does not attract the attention of the occupant who resides in the building toward the mechanism of the connection devices.

In order to comply with the above, in this solution refinements have been adopted which are adapted to reduce the aesthetic impact of the mechanism used to the detriment of functionality, of precision and of practical assembly at the building site and of the possibility of adjustment on the three Cartesian axes, as well as of the static certainty of load distribution.

In summary, this solution of the known type is not free from drawbacks, which include the fact that they are very inflexible systems, in the sense of being scarcely practical, scarcely adjustable and with great inconveniences in use, which slow down installation and may make it impossible.

More specifically, a first drawback of this solution of the known type resides in the fact that the allowed coupling tolerances are substantially nil, and do now allow mutual couplings that reabsorb the tolerances in the production of the components and in their installation.

Only one millimeter of tolerance is in fact available, and sometimes even less, since there are threaded holes, and it is not possible to have greater tolerances since otherwise unwanted translations of the fork with respect to the base would be allowed which are to be avoided in the case of a horizontal earthquake.

The terminals are fixed by means of the classic screw anchors, the insertion of which in the concrete components must meet the impossible constraint of not making drilling mistakes even by 1 millimeter, being incompatible with the real construction tolerances of a building site.

A second drawback of this solution of the known type resides in the fact that the hinge is only two-dimensional and does not allow inclinations of the poles, or pivoting orientations, and this entails that the hinges fixed to the ends cannot be positioned with even minimal errors.

For example, if one end were placed after being rotated by 1-2 millimeters clockwise and the other end were rotated by 1-2 millimeters counterclockwise, the fork would no longer be able to engage the plate.

If the orientation error is then added to the pole center distance error, shifting to the right or to the left by 1-2 millimeters, the entire system could not be assembled for an additional reason.

The errors would in fact add up and since a hinge coupling without tolerances were available, one would no longer be able to assemble the rods with the opposite hinges.

As a direct consequence, moreover, it is not possible to preinstall the screw anchors in the factory, i.e., at the industry that produces the components, away from the building site, but one is forced to install screw anchors during work, i.e., on site, at an elevation of up to approximately tens of meters from the ground, generating noise and disturbance of the quiet of the guests of the building and of the adjacent buildings for an indefinite time that is equal to the months for which the building site is open.

A third drawback of this solution of the known type resides in the fact that rod extension adjustment is allowed only on one Cartesian axis and in order to correct the extension it is always necessary to disassemble the entire mechanism accommodated in the rod, with consequent severe slowing down of installation times and therefore costs.

Furthermore, such an adjustment is highly approximate, since adjustment is possible only after extracting the entire assembly by turning a screw without offering direct verification, since reassembly is necessary in order to verify the effectiveness and the correctness of the adjustment, with the consequent establishment of an iterative disassembly-adjustment-reassembly cycle in order to converge toward the optimum adjustment.

Moreover, these operations, if prolonged all-out over time, can lead to damage of the internal mechanism, for example wearing the threads, compromising the mechanical strength of the connection device.

All this leads to having, for this solution of a known type, an imperfect and scarcely precise assembly with poor quality of the alignments.

Finally, a fourth drawback of this solution of the known type resides in the fact that the sunbreakers are supported by a number of poles comprised between 4 and 10 for each sunbreaker, with the consequent need to have the certainty that all the poles are active simultaneously in order to avoid imbalances of the entire system.

In case of nonuniform loadings of the poles, the reference static layout would in fact be altered, undermining at the base the safety of the system, with the result that some poles would bear no weight and only the poles that are working might bear twice or three times the load for which they were designed, with the consequent danger of buckling or inflection due to top loading for instability, of possible collapses and/or making the concrete components, which would have fewer supports than intended, flex much more, and therefore greater cantilevers and more unexpected deformations which might cause the flexing and cracking of the concrete components.

The aim of the present invention is to provide a connection device, particularly of the strut-tie type, that overcomes the drawbacks noted above and other similar negative aspects while maintaining the desired aesthetic requirements.

Within this aim, an object of the present invention is to provide a connection device, particularly of the strut-tie type, the mechanism of which is completely concealed from view and the aesthetics of which is not exclusively constrained to functional and technical aspects of the device itself.

Another object of the present invention is to provide a connection device, particularly of the strut-tie type, that allows immediate and easily executable adjustments, being at the same time adaptable to any installation and use condition.

Another object of the present invention is to provide a connection device, particularly of the strut-tie type, that ensures adequate structural strength and reliability in operation.

Another object of the present invention is to provide a connection device, particularly of the strut-tie type, that is easy to provide using technologies and components and materials that are commonly commercially available.

Another object of the present invention is to provide a connection device, particularly of the strut-tie type, that has low manufacturing costs.

This aim, as well as these and other objects which will become more apparent hereinafter, are achieved by a connection device, particularly of the strut-tie type, characterized in that it comprises two spherical joints which can be associated with the mutually facing surfaces of two components to be connected and a maneuvering pole which can be associated, at its ends, with said two spherical joints, at least one of said spherical joints being associated with said maneuvering pole by means of a threaded maneuvering coupling so as to compensate for any incidences of said surfaces and so as to be able to adapt the longitudinal length of said connection device as a function of the distance of said two surfaces by rotating said maneuvering pole about its own longitudinal axis.

Further characteristics and advantages of the present invention will become more apparent from the description of a preferred not exclusive embodiment of a connection device, particularly of the strut-tie type, illustrated by way of non-limiting example with the aid of the accompanying drawings, wherein:
Figure 1 is a perspective view of a supporting structure between two components which comprises a plurality of connection devices according to the present invention;
Figure 2 is a perspective view of an embodiment of the connection device according to the present invention;
Figure 3 is an exploded perspective view of the connection device shown in Figure 2;
Figure 4 is a lateral elevation view of the connection device shown in the preceding figures;
Figure 5 is a sectional view of the connection device shown in Figure 4, taken along the sectional plane V-V;
Figure 6 is an enlarged-scale view of two details of the connection device shown in Figure 5;
Figure 7 is a perspective view of a variation of the connection device shown in the preceding figures;
Figure 8 is an exploded perspective view of the connection device shown in Figure 7;
Figure 9 is an exploded perspective view of a spherical joint of the connection device shown in the preceding Figures 7 and 8;
Figure 10 is a longitudinally sectional exploded perspective view of the spherical joint shown in Figure 9;
Figure 11 is a sectional lateral elevation view of the spherical joint shown in the preceding figures;
Figure 12 is a sectional exploded lateral elevation view of the spherical joint shown in the preceding figures;
Figure 13 is a sectional perspective view of the spherical joint shown in the preceding figures;
Figure 14 is a lateral elevation view of the connection device shown in the preceding Figures 7 and 8;
Figure 15 is a sectional view of the connection device shown in Figure 14, taken along the sectional plane XV-XV.

With reference to the figures, the connection device, particularly of the strut-tie type, generally designated by the reference numeral la, comprises two spherical joints 2 and 3 which can be associated with the mutually facing surfaces 4 and 5 of two components 6 and 7 to be connected and a maneuvering pole 8 which can be associated, at its ends 9 and 10, with the two spherical joints 2 and 3.

Advantageously, at least one of the spherical joints 2 is associated with the maneuvering pole 8 by means of a threaded maneuvering coupling so as to compensate for any incidences of the surfaces 4 and 5 and so as to be able to adapt the longitudinal length of the connection device 1a as a function of the distance of the two surfaces 4 and 5 by rotating the maneuvering pole 8 about its own longitudinal axis 11.

Conveniently, in the proposed embodiment, the other spherical joint 3 also is associated with the maneuvering pole 8 with an additional threaded maneuvering coupling and the two threaded maneuvering couplings are respectively right-handed and left-handed so as to compensate for any incidences of the surfaces 4 and 5 and be able to adapt, at either end, in addition to the longitudinal length, also the traction of the connection device 1a and 1b as a function of the distance of the two surfaces 4 and 5 by rotating the maneuvering pole 8 about its own longitudinal axis 11.

In greater detail, each spherical joint 2 and 3 comprises a main body 12 which can be associated with the respective surfaces 4 and 5 and a threaded pivot with spherical head 13 which is partially accommodated in the main body 12 at its spherical head 14 in a hemispherical cradle 15 formed by the main body 12.

Furthermore, each spherical joint 2 and 3 comprises a closure element 16 of the perforated type which is detachably associated with the main body 12 by means of a first shape mating so as to be fitted on the threaded stem 17 of the threaded pin with spherical head 13 and so as to block it against translation.

Conveniently, the surface 28 of the closure element 16 that is opposite with respect to the hemispherical cradle 15 is of the concave type so as to surround, together with the hemispherical cradle 15, the spherical head 14, defining as a whole a substantially spherical receptacle and the threaded stems 17 of the threaded pins with spherical head 13 respectively have a right-handed external thread and a left-handed external thread.

Advantageously, each closure element 16 comprises a through hole 18 with a cross-section that increases away from the concave surface 28 so as to define the maximum angle of inclination of the respective spherical joint 2 or 3.

In the proposed embodiment, each main body 12 can be associated with the respective surface 4 or 5 by means of an intermediate base 19, which in turn can be associated with the respective surface 4 or 5 by virtue of screw fixing means 20, for example a nut with a rotation-preventing washer, and is detachably associated with the main body 12 by means of a second shape mating which is opposite with respect to the first shape mating.

However, it is not excluded that in a variation of the proposed embodiment that is not shown, the intermediate base 19 and the main body 12 might be monolithic.

In greater detail, each closure element 16 comprises a first ring 21, of the type with an external thread, which is screwed at a corresponding first thread 22 which is formed on the main body 12 and is of the type with internal thread.

Furthermore, each intermediate base 19 comprises a second ring 23, of the type with an external thread, which is screwed at a corresponding second thread 24 which is formed on the main body 12 and is of the type with internal thread.

As regards the maneuvering pole, 8, it has, at its ends 9 and 10, two threaded holes 25 which are mutually coaxial parallel to the longitudinal axis 11 and are respectively screwed on the threaded stems 17 of threaded pins with spherical head 13.

Conveniently, consistently with what has already been mentioned, the threaded holes 25 have, respectively, a right-handed internal thread and a left-handed internal thread which correspond to the threads of the threaded stems 17 of the threaded pivots with spherical head 13.

In the proposed embodiment, the maneuvering pole 8 comprises a tubular body 26 and two perforated plates 27 which are integrally associated with the ends 9 and 10 and form the threaded holes 25.

However, it is not excluded that in a variation of the proposed embodiment that is not shown the perforated plates 27 and the maneuvering pole 8 might be provided monolithically.

Conveniently, both the maneuvering pole 8 and the main bodies 12 may have a transverse cross-section the external profile of which is comprised in the group constituted by: polygonal profiles, curvilinear profiles, circular profiles, elliptical profiles, wing-like profiles, teardrop profiles, and irregular profiles.

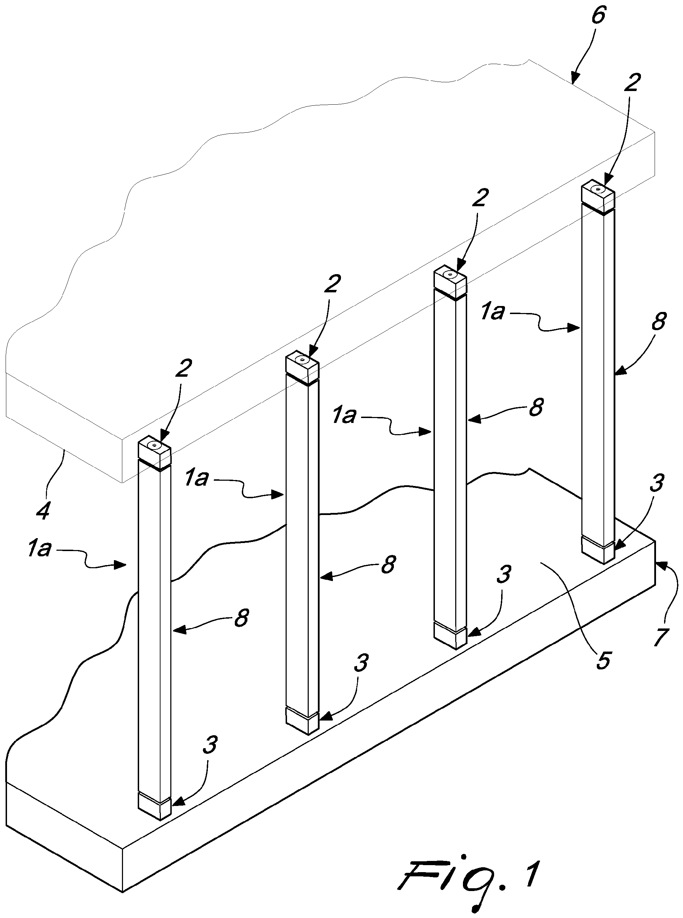

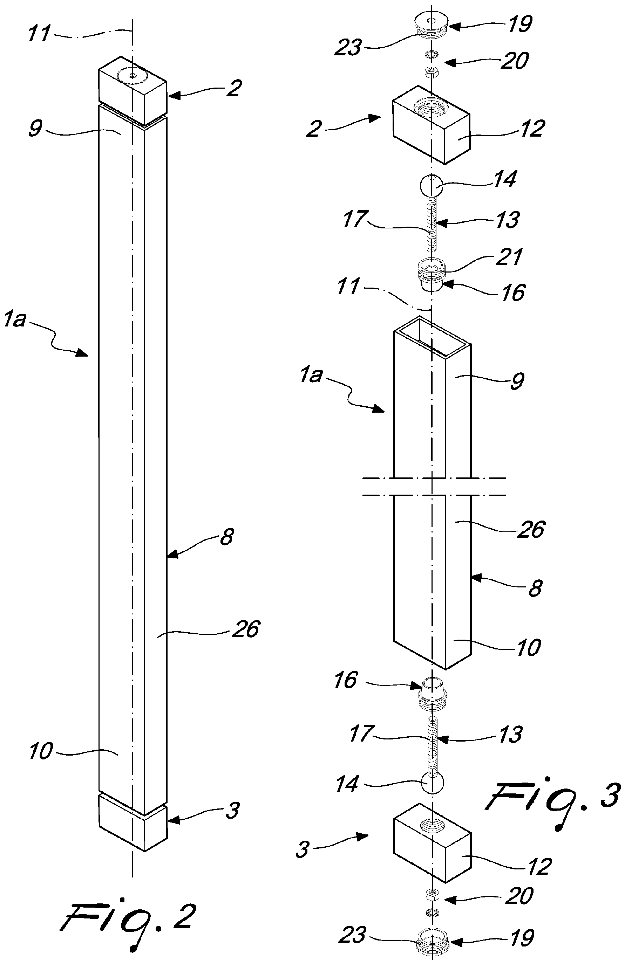

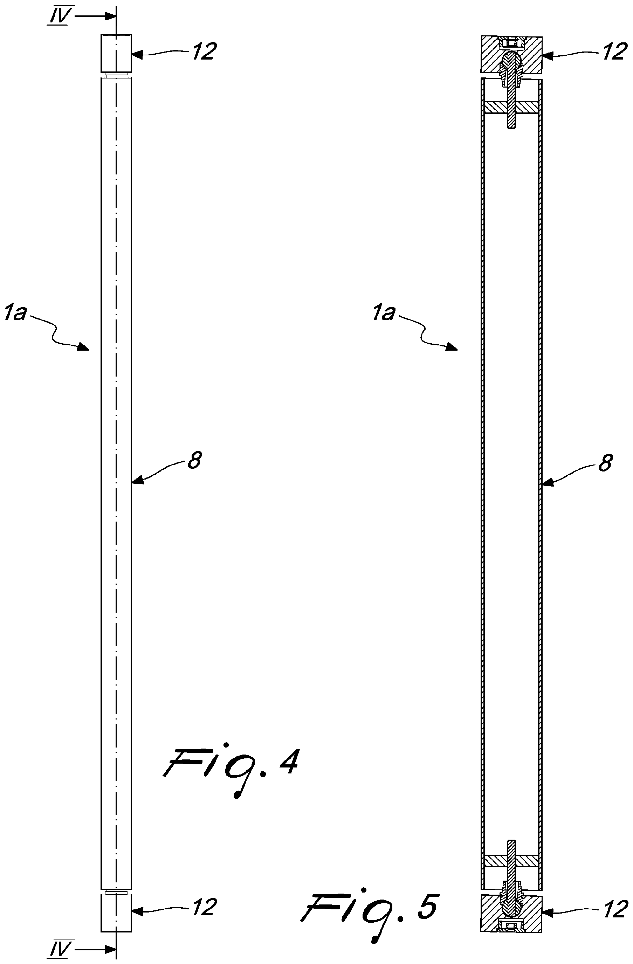

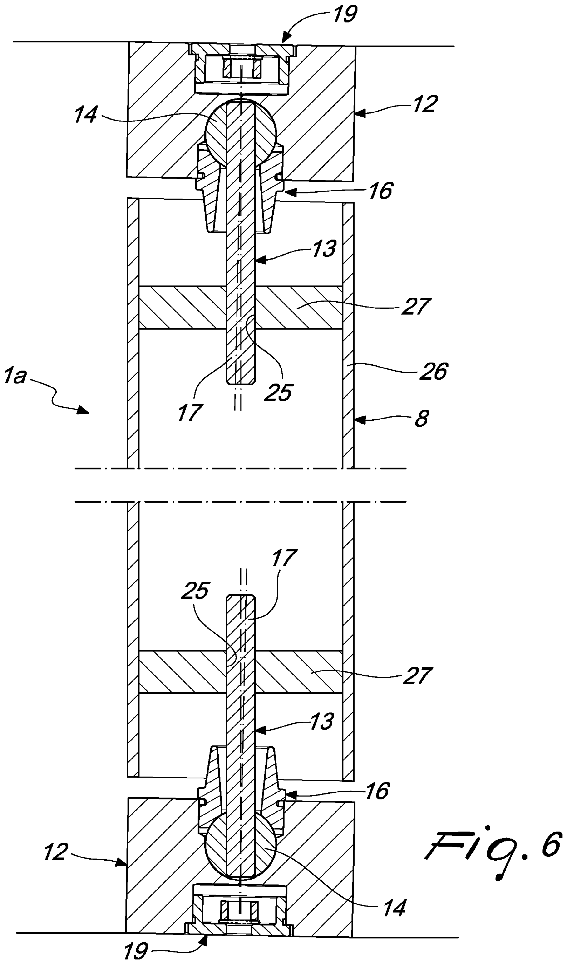

In this regard, with particular reference to Figures 1 to 6, in the proposed embodiment the maneuvering pole 8 and the main bodies 12 have transverse cross-sections such as to have mutually identical external profiles, which, in the proposed embodiment, are rectangles.

However, it is not excluded that in a variation of the proposed embodiment that is not shown, the maneuvering pole 8 and the main bodies 12 might have transverse cross-sections such as to have mutually different external profiles depending on the sought aesthetic effect.

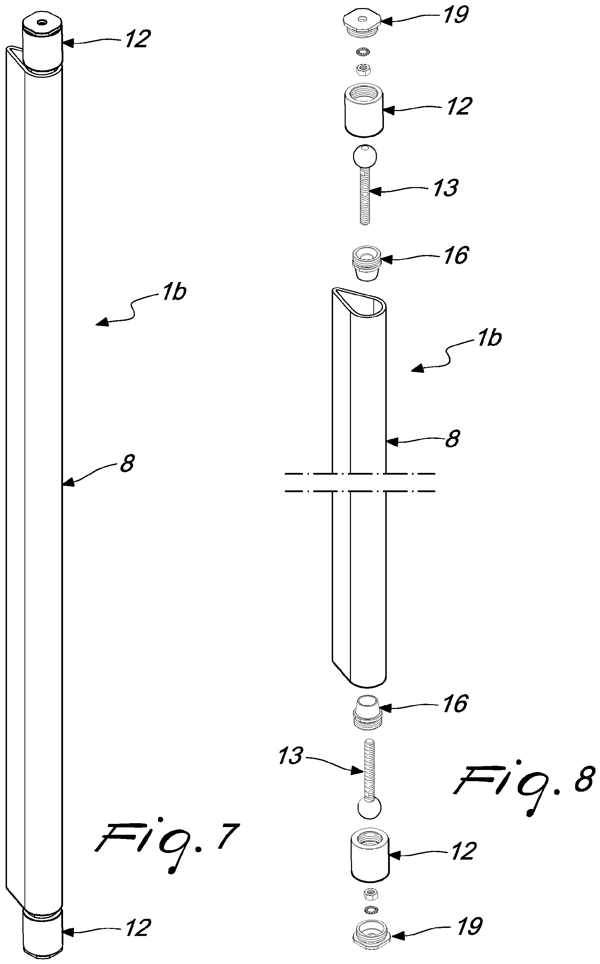

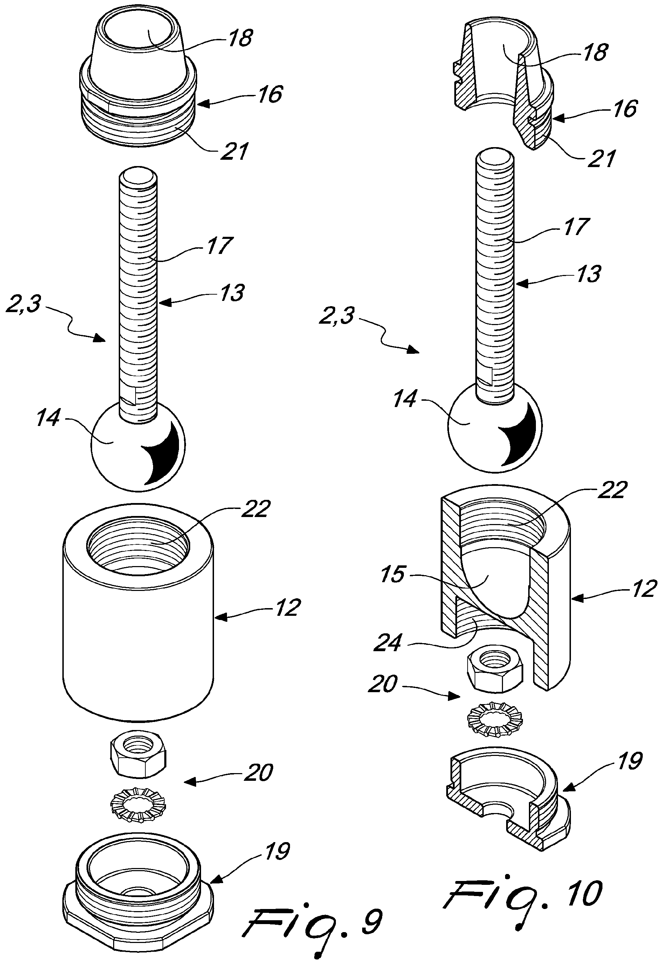

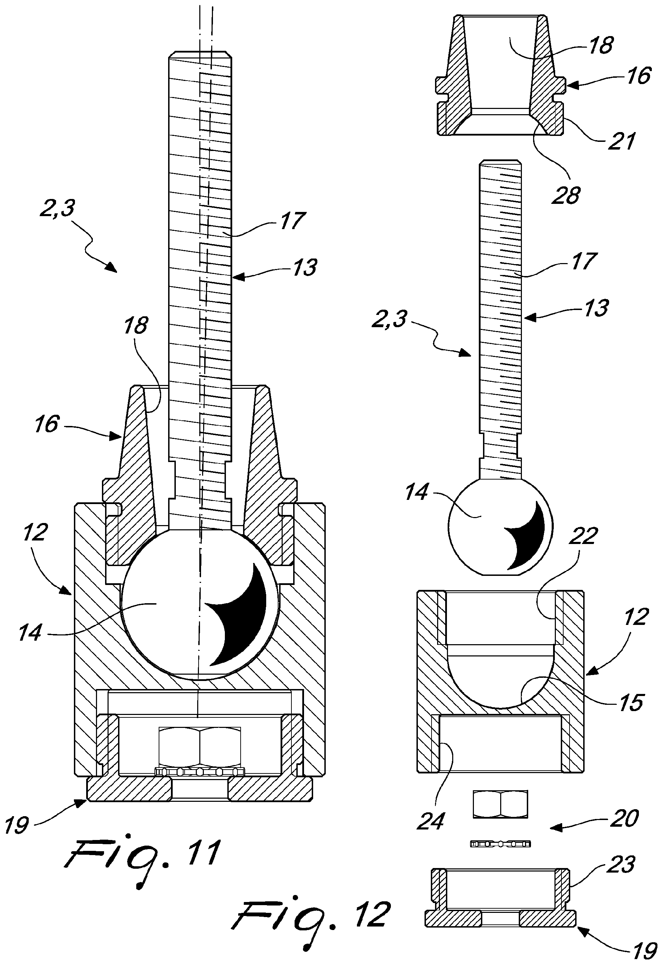

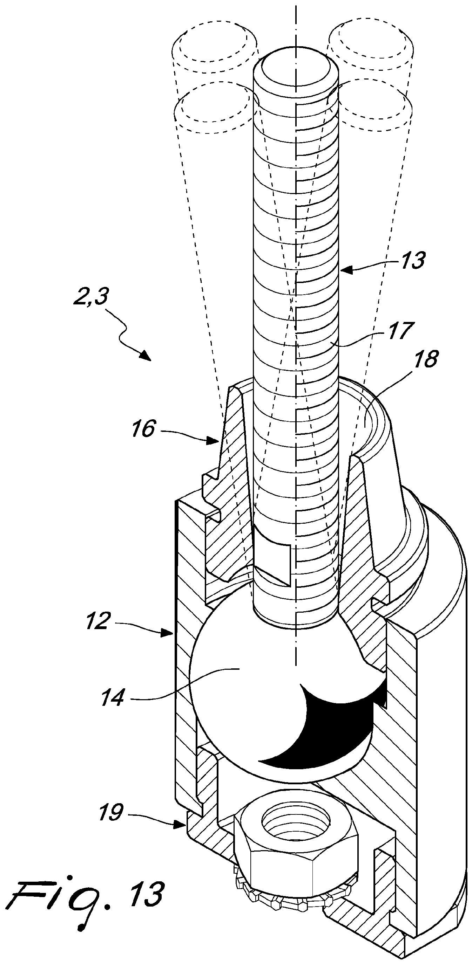

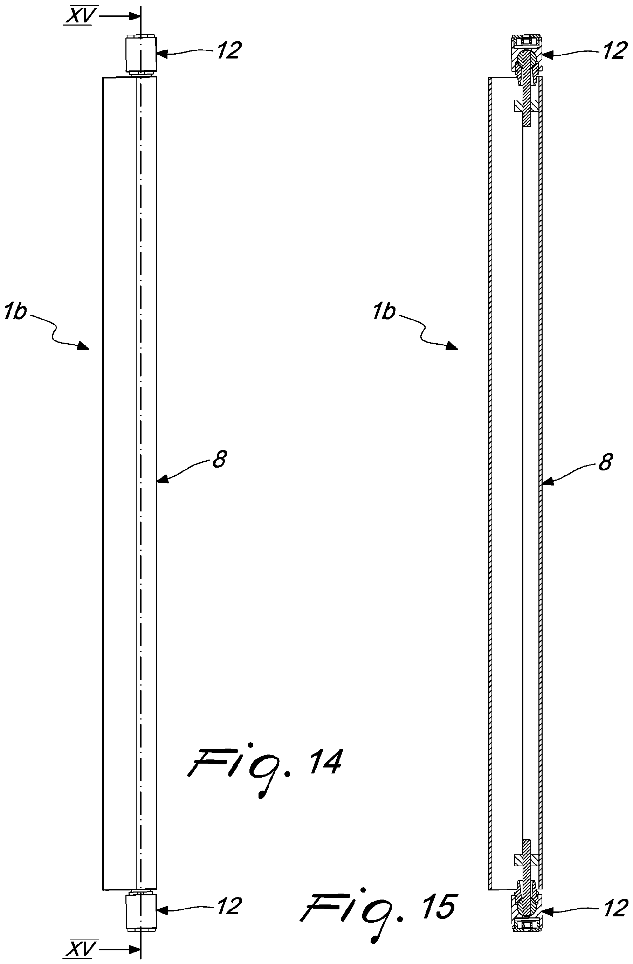

In fact, with particular reference to Figures 7 to 15, in a variation 1b of the connection device, the maneuvering pole 8 and the main bodies 12 have transverse cross-sections such that the former has a teardrop profile and the latter have a circular profile.

In one possible variation of the connection device that has just been described, one of the two spherical joints 2 and 3 can be associated with the maneuvering pole 8 by means of a slider-type coupling which is extended along the longitudinal axis 11 so as to compensate for any variations of the distance between said two components.

In greater detail, in this additional variation the components described so far for the connection devices 1a and 1b remain substantially unchanged except for the slider-type coupling, which can be provided by a linear male-female coupling, for example with a calibrated coupling instead of the thread between the corresponding stem and the corresponding hole in the maneuvering pole 8, so as to allow an adequate telescopic relative sliding.

In this manner, the maneuvering pole 8 is coupled to the two components and is subjected to inflection by pressure and tension and continues to perform the role of a spacer between two opposite components and of absorbing manufacturing and installation tolerances, concealing the pivoting and extensible spherical adjustment components, supporting clean aesthetics with a flange space occupation that is equal to or smaller than that of the pole.

The operation of the connection devices 1a and 1b can be easily deduced from what has been described so far.

Once the intermediate bases 19 have been fixed to the components 6 and 7, one proceeds with the assembly of the main bodies 12 associated with the maneuvering pole 8.

In this step, by virtue of the spherical joints 2 and 3 any incidences between the surfaces 4 and 5 can be compensated easily and immediately.

Subsequently, by acting on the maneuvering pole 8, i.e., by rotating it about its own longitudinal axis 11, it is possible to adjust the length and the tension of the connection devices 1a and 1b.

In practice it has been found that the connection device, particularly of the strut-tie type, according to the present invention achieves the intended aim and objects, since it offers a structure that is aesthetically superior to devices of the known type, in which all of the mechanism is hidden from view, at the same time offering a device that is extremely flexible, reliable and easy and straightforward to use.

The connection device according to the present invention is in fact essentially based on the use of a spherical joint and of an extension adjustment that is concealed inside the maneuvering pole and can be operated without disassembling the pole or any other component of the device.

In greater detail, the joint, being of the spherical type, allows all the orientations/inclinations that are necessary depending on the boundary conditions and the extension tool, being concealed inside the pole and connected to the two spherical joints with mutually opposite threads, can be adjusted simply by rotating the pole about its own longitudinal axis.

One advantage of the connection device according to the present invention resides in the fact that it overcomes the limitations of hinges of the traditional type, allowing a factory preinstallation and making it possible to compensate for the classic installation tolerances that are typical of a building site (therefore in a position in which they are slightly axially offset, with slight center distance and elevation or orientation errors), at the same time compensating also for the installation tolerances of the concrete components, by means of the spherical joints combined with the fine adjustment in extension of the maneuvering pole.

Another advantage of the connection device according to the present invention resides in having the assurance that all the poles installed in a complex structure are rendered active, bearing the weight assigned to them by an assured resting contact, provided by the static layout by virtue of the fact that it is a strut-tie without play, which never loses contact and adapts to the requirements of the production and installation tolerances, in a logic of continuous micrometric adjustment, by pivoting-oscillating-extending.

Another advantage of the connection device according to the present invention resides in the fact that it has aesthetics that is independent of any functional limitation, such as to allow the choice of the most disparate profiles to seek a refined and elegant aesthetic effect, in the spirit of greater beauty sought by the design of, for example, sunbreakers and their connections in buildings and the like.

In all this, it is possible to choose profiles that offer a smaller visual space occupation for a person who looks toward the outside of the room and faces the poles that support the sunbreakers, offering an optimized view and on the other hand improves the generation of shadows provided by the poles affected by the rays of the sun.

The connection device, particularly of the strut-tie type, thus conceived is susceptible of numerous modifications and variations, all of which are within the scope of the appended claims.

All the details may furthermore be replaced with other technically equivalent elements.

In practice, the materials used, as long as they are compatible with the specific use, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A connection device (1a; 1b), particularly of the strut-tie type, **characterized in that** it comprises two spherical joints (2, 3) which can be associated with the mutually facing surfaces (4, 5) of two components (6, 7) to be connected and a maneuvering pole (8) which can be associated, at its ends (9, 10), with said two spherical joints (2, 3), at least one of said spherical joints (2, 3) being associated with said maneuvering pole (8) by means of a threaded maneuvering coupling so as to compensate for any incidences of said surfaces (4, 5) and so as to be able to adapt the longitudinal length of said connection device (1a, 1b) as a function of the distance of said two surfaces (4, 5) by rotating said maneuvering pole (8) about its own longitudinal axis (11).

2. The connection device (1a; 1b) according to claim 1, **characterized in that** the other one of said spherical joints (2, 3) is associated with said maneuvering pole (8) by means of a slider-type coupling that is extended along said longitudinal axis (11) so as to compensate for any variations of the distance between said two components.

3. The connection device (1a; 1b) according to claim 1, **characterized in that** the other one of said spherical joints (2, 3) is associated with said maneuvering pole (8) via a further threaded maneuvering coupling, said threaded maneuvering couplings being respectively right-handed and left-handed so as to compensate for any incidences of said surfaces (4, 5) and so as to be able to adapt, at either end, in addition to the longitudinal length, also the traction of said connection device (1a, 1b) as a function of the distance of said two surfaces (4, 5) by rotating said maneuvering pole (8) about said longitudinal axis (11).

4. The connection device (1a; 1b) according to one or more of the preceding claims, **characterized in that** each one of said spherical joints (2, 3) comprises a main body (12) which can be associated with the respective one of said surfaces (4, 5) and a threaded pin with spherical head (13) which is partially accommodated in said main body (12) at its spherical head (14) in a hemispherical cradle (15) formed by said main body (12); each one of said spherical joints (2, 3) further comprising a closure element (16) of the perforated type detachably associated with said main body (12) by means of a first shape mating so as to be fitted on the threaded stem (17) of said threaded pin with spherical head (13) and so as to block against translation said threaded pin with spherical head (13); the surface of said closure element (16) that is opposite with respect to said hemispherical cradle (15) being of the concave type so as to surround, together with said hemispherical cradle (15), said spherical head (14), forming as a whole a substantially spherical receptacle; the threaded stems (17) of said threaded pins with spherical head (13) respectively having a right-handed external thread and a left-handed external thread.

5. The connection device (1a, 1b) according to claim 4, **characterized in that** each one of said closure elements (16) comprises a through hole (18) with a cross-section that increases away from said concave surface (28); said through hole (18) defining the maximum angle of inclination of the respective one of said spherical joints (2, 3).

6. The connection device (1a, 1b) according to claims 4 or 5, **characterized in that** each one of said main bodies (12) can be associated with said respective one of said surfaces (4, 5) by means of an intermediate base (19); said intermediate base (19) being associable with said respective one of said surfaces (4, 5) by virtue of screw fixing means (20) and being detachably associated with said main body (12) by means of a second shape mating which is opposite with respect to said first shape mating.

7. The connection device (1a, 1b) according to one or more of claims 4 or 6, **characterized in that** each one of said closure elements (16) comprises a first ring (21) which is screwed at a first corresponding thread (22) formed on said main body (12).

8. The connection device (1a, 1b) according to claim 7, **characterized in that** said first ring (21) is of the type with external thread and **in that** said first thread (22) is of the type with internal thread.

9. The connection device (1a, 1b) according to one or more of claims 6 to 8, **characterized in that** each one of said intermediate bases (19) comprises a second ring (23) which is screwed at a corresponding second thread (24) formed on said main body (12).

10. The connection device (1a; 1b) according to claim 9, **characterized in that** said second ring (23) is of the type with external thread and said second thread (24) is of the type with internal thread.

11. The connection device (1a, 1b) according to one or more of claims 1 to 10, **characterized in that** said maneuvering pole (8) has, at said ends (9, 10), two threaded holes (25) which are mutually coaxial in parallel to said longitudinal axis (11) of said maneuvering pole (8) respectively, which are screwed on said threaded stems (17) of threaded pivots with spherical head (13), said threaded holes (25) having, respectively, a right-handed internal thread and a left-handed internal thread which correspond to the threads of said threaded stems (17) of said threaded pins with spherical head (13).

12. The connection device (1a, 1b) according to claim 11, **characterized in that** said maneuvering pole (8) comprises a tubular body (26) and two perforated plates (27) which are integrally associated with said ends (9, 10), said perforated plates (27) forming said threaded holes (25).

13. The connection device (1a, 1b) according to one or more of the preceding claims, **characterized in that** said maneuvering pole (8) has a transverse cross-section the external profile of which is comprised in the group constituted by: polygonal profiles, curvilinear profiles, circular profiles, elliptical profiles, wing-like profiles, teardrop profiles, and irregular profiles.

14. The connection device (1a, 1b) according to one or more of the preceding claims, **characterized in that** said main bodies (12) have a transverse cross-section the external profile of which is comprised in the group constituted by: polygonal profiles, curvilinear profiles, circular profiles, elliptical profiles, wing-like profiles, teardrop profiles, and irregular profiles.

15. The connection device (1a, 1b) according to one or more of the preceding claims, **characterized in that** said maneuvering pole (8) and said main bodies (12) have such transverse cross-sections as to have mutually identical external profiles.
